Europäisches Patentamt

European Patent Office

Office européen des brevets

(11) Publication number: **0 106 293**
A.2

# EUROPEAN PATENT APPLICATION

(21) Application number: 83110061.5

(22) Date of filing: 08.10.83

(51) Int. Cl.³: **C 08 F 20/12**
**C 08 F 2/00**

(30) Priority: 12.10.82 JP 179575/82

(43) Date of publication of application:
25.04.84 Bulletin 84/17

(84) Designated Contracting States:
BE DE FR GB IT NL

(71) Applicant: KANEGAFUCHI KAGAKU KOGYO KABUSHIKI
KAISHA
2-4 Nakanoshima 3-chome
Kita-ku Osaka-shi(JP)

(72) Inventor: Mitani, Toragoro
829-4, Sone-cho
Takasago-shi Hyogo-ken(JP)

(72) Inventor: Yasui, Hideo
, 3-11-30, Utashikiyama Tarumi-ku
Kobe-shi Hyogo-ken(JP)

(72) Inventor: Morikawa, Hisashi
51-40, Kuchiri Onoe-cho
Kakogawa-shi Hyogo-ken(JP)

(74) Representative: Türk, Dietmar, Dr. rer. nat. et al,
Redies, Redies, Türk & Gille Patentanwälte
Brucknerstrasse 20
D-4000 Düsseldorf 13(DE)

(54) Process for polymerization of acrylate or methacrylate.

(57) In a process for polymerizing an acrylate or a methacrylate monomer alone, a mixture thereof or a mixture of an acrylate or a methacrylate monomer as a main component and other copolymerizable monomers in the presence of water, an emulsifiers and a polymerization initiator soluble in water or the monomers; the improvement which comprises carrying out that the polymerization in a polymerization vessel having a film on an inner surface thereof and on surfaces of attached instruments within the vessel, said film being formed by applying a solution of an aromatic quinone-amine compound which is insoluble in water or the monomers, contains a quinone group and an amine group capable of inhibiting the radical polymerization and contains a functional group having a chelate-forming ability for adhering the compound to the surfaces, and removing the solvent by drying. According to the process, the scale deposition in the polymerization of an acrylate or a methacrylate can be prevented.

EP 0 106 293 A2

## PROCESS FOR POLYMERIZATION OF ACRYLATE OR METHACRYLATE

The present invention relates to a process for polymerizing an acrylate or a methacrylate (hereinafter referred to as "(meth)acrylate"), more particularly relates to a process of polymerization capable of preventing scale deposition by carrying out an emulsion polymerization of (meth)acrylate monomers in an aqueous medium within a polymerization vessel on an inner surface of which a film of an aromatic quinone-amine compound which is insoluble in the monomers is formed.

In case of polymerizing a (meth)acrylate monomer alone, a mixture of (meth)acrylate monomers or a mixture of (meth)acrylate monomers as a main component and other copolymerizable monomers in the presence of water, an emulsifier and a polymerization initiator or a polymerization adapting agent, there is a problem that a polymer scale deposits on the surfaces of the inner wall of the vessel, the surfaces of the stirring blades and buffle plates attached in the polymerization vessel. This causes many defects such as decrease in heat transfer efficiency through the inner wall of the vessel, decrease in yield, deterioration of products due to the admixing of the pealed scales and reduction in oparating rate of the vessel due to labors and time required for removing the scales out of the surface. Though there hitherto have been proposed various processes for preventing scale deposition, those processes do not satisfy every requirement, and any suitable process has never been found.

As a result of intensive studies for resolving the above-mentioned defects, it has now been found that a compound synthesized from an aromatic quinone and an aromatic amine is particularly useful as an agent to prevent the deposition of polymer scale on the surface (hereinafter referred to as "scale deposition-preventing agent").

In accordance with the present invention, there can be provided a process for polymerizing a (meth)-acrylate monomer alone, a mixture of (meth)acrylate monomers or a mixture of (meth)acrylate monomers as a main component and other copolymerizable monomers in the presence of water, an emulsifier and a polymerization initiator or a polymerization adapting agent which is improved in that the polymerization is carried out in a polymerization vessel having a film, on an inner surface thereof and on surfaces of instruments attached whithin the vessel, said film being formed by applying a solution of an aromatic quinone-amine compound which is insoluble in water or the monomers, contains a quinone group and an amine group having radical polymerization-inhibiting ability and contains a functional group having a chelate-forming ability and removing the solvent by drying.

The following three abilities of the aromatic quinone-amine compound are very important for prevention of scale deposition.

(a) Radical polymerization-inhibiting ability

(b) Adhering ability to the surface of the vessel

(c) Hydrophilic ability

Among the above abilities, the abilities (a) and (b) are particularly important. Though the scale deposition-preventing effect can be sufficiently obtained from the abilities (a) and (b), when the compound has also the ability (c), the preventing effect of the compound is more increased. The scale deposition-preventing effect cannot be obtained at all when using a compound lacking of the ability (a) or (b).

The above three abilities are explained in detail as follows:

(a) Radical polymerization-inhibiting ability

In the emulsion polymerization system using (meth)acrylate monomers, even though an agent having at least one property among repelling property for water and oil, ionic repulsive property which prepares the surface to be the same charge as that of the monomer droplet and the polymer particle, radical polymerization-inhibiting property and hydrophilic property has been applied on the inner surface and the surfaces of instruments attached in the polymerization vessel, an attempt to decrease the amount of polymer scale less than that in a system without applying agent has not been succeeded till now.

As a result of our study, it has been found the facts that among the compounds having radical polymerization-inhibiting ability, only an aromatic compound specifically constructed with a quinone group and an amine group exhibits an excellent scale deposition-preventing effect.

In other words, radical polymerization-inhibiting ability gives fundamental function on the scale deposition-preventing effect to the aromatic quinone-amine compound. Through the above study, the radical polymerization-inhibiting ability has been concluded to be one of the essential abilities of the scale deposition-preventing agent.

(b) Adhering ability

In case where the above compound cannot strongly adhere to the surface of the vessel or is soluble in water, the (meth)acrylate monomers or the copolymerizable monomers, the scale deposition-preventing effect cannot be obtained since the film of the compound is easy to be pealed off or to dissolve into the polymerization mixture, even though the compound has the radical polymerization-inhibiting ability. For instance, when a phenol type, an amine type or a phosphorous type radical polymerization inhibitor or antioxidant is applied on the surface of the vessel, the film of the agent easily dissolves in the monomers. The dissolution of the agent not only extremely lowers the scale depposition-preventing effect, but also disturb the polymerization reaction.

Accordingly, in order to obtain the prolonged scale deposition-preventing effect, it is important to give the agent an excellent adhering property to the surface of the vessel. The adhering property can be obtained by forming a chelete bond between the agent and the surface of the vessel. In the aromatic quinone-amine compound a substituent of the aromatic ring having at least one member selected from the group consisting of oxygen atom, nitrogen atom, phosphorous atom, sulfur atom, amino group and carbonyl group works as the functional group having the chelete-forming ability

(c) Hydrophilic ability

In general, when a lipophilic compound is applied to the surface of the vessel, a lipophilic monomer is easy to adhere to the surface, and then polymerized to form a polymer scale thereon. Accordingly, by giving the hydrophilic ability to the compound having the radical polymerization-inhibiting ability and the adhering ability, the compound exhibits the increased scale deposition-preventing effect. This phenomenon is presumed that the surface of the vessel increases in wettability to water by applying the hydrophilic compound to form a water film thereon, whereby the polymerization on the surface is inhibited and the access of the produced polymer is also prevented. In order to obtain the hydrophilic ability, it is necessary that the aromatic quinone-amine compound has a hydrophilic group such as -OH, $-NH_2$ or -NH-.

The aromatic quinone-amine compound employed in the present invention as a scale deposition-preventing agent is synthesized from an aromatic quinone and an aromatic amine. Examples of the aromatic quinones are, for instance, benzoquinone, naphthoquinone, aceto-naphthenequinone, phenanthraquinone, anthraquinone, and the like. Furthermore, substituted quinone derivatives having on the aromatic ring at least one substituent such as chlorine atom, bromine atom, methyl, amino group, an alkoxy group or hydroxyl group may be also employed. Examples of the aromatic amines are, for instance, phenylenediamine, diaminonaphthalene, diaminoacridine, diaminopyridine, diaminopyrimidine, diaminofluorene, diaminoazobenzene, diaminobenzidine, diaminodiphenylamine, diaminotoluene, and substituted amine derivatives thereof having on the aromatic ring a substituent such as an alkyl group, an aryl group, an alkoxy group, halogen atom, hydroxyl group or mercapto group.

The above reaction of the quinones and the amines is carried out by admixing with stirring after dissolving them in an organic solvent under $N_2$ gas atmosphere at normal pressure, if necessary, with heating or a catlyst. After completion of the reaction, the resulting precipitate is filtered, washed and dried under reduced pressure. In order to give the hydrophilic property to the compound, the resulting compound is again dissolved in an organic solvent or suspended in water and reduced, for instance, with aqueous solution of sodium hydrosulfite. The filtrate obtained from the resulting reaction mixture has the hydrophilic property.

The above organic solvent is selected from a viewpoint of solubility of the resulting compound so that the solubility of the resulting compound is not less than that of the (meth)acrylate monomer.

The above compound prepared by using the appropriate organic solvent as mentioned above is insoluble in water or the monomers, and has the above-mentioned abilities (a) and (b) or the abilities (a) to (c). The film of the aromatic quinone-amine compound is formed by dissolving or suspending in a suitable solvent and applying on the surfaces such as the inner wall of the vessel, the stirring blades and the buffle plates within the vessel, and removing the solvent by drying.

As a solvent employed in the scale deposition-preventing agent, the following three properties are required.

(1) A large solubility for ensuring the desired thickness of a film formed on the surfaces

(2) A low boiling point for easy drying

(3) A small surface tension for uniform application on the surface

However, it is not easy to find out a solvent satisfying the above all requirements.

As to the uniform application, the following counterplan is considered. Principally the solvent should have the surface tension not more than that of the surface to be applied. In fact, when a solution of the aromatic quinone-amine compound is applied to a stainless steel (SUS304), a uniform application is difficult unless the surface tension of the solvent of the solution is not more than 30 dyne/cm. However, in the case of using a solvent having a large surface tension such as morpholine, dimethylformamide or dimethylacetamide the surface tension can be adjusted to a preferable level by adding a solvent having a small surface tension such as methyl-n-propyl-ketone, amyl acetate, n-buthanol, tetrahydrofuran or ethanol in an amount of 20 to 50 % by volume to it. Further, the uniform application can also be obtained by adding an organic acid such as thiosalicylic acid, benzoic acid, palmitic acid or stealic acid; a weakly acidic inorganic acid such as sulfamic acid; or a chelating agent such as disodium ethylenediaminetetraacetate in an amount of 0.1 to 0.3 % by weight of the amount of scale deposition-preventing agent. In any case, however, since the solubility of the mixed solvent is reduced somewhat rather than that of the solvent alone, the most profitable measure should be searched by an experiment.

In the light of the above-mentioned properties, examples of the solvents are, for instance, ketones such as acetone, methylethyl ketone, diethyl ketone and methyl-n-propyl ketone; acetyl amides such as dimethylacetamide; esters such as isopropyl acetate, amyl acetate and propyl formate; nitrogen-containing compounds such as pyridine, morpholine and dimethylformamide; hexamethyl phosphoric acid triamide; dimethylsulfoxide; and an admixture thereof.

An application amount of the scale deposition-preventing agent on the surface is generally in the range of 0.001 to 5 $g/m^2$. The above amount is not particularly limited as far as an influence on the polymerization system is allowably small.

Examples of the (meth)acrylate monomers employed in the present invention are, for instance, acrylates such as methyl acrylate, ethyl acrylate, butyl acrylate, octyl acrylate, dodecyl acrylate, cyclohexyl acrylate, β-hydroxyethyl acrylate, glycidyl acrylate, cyanoethyl acrylate and alkoxycarbonylmethyl acrylate; methacrylates such as methyl methacrylate, ethyl methacrylate and butyl methacrylate, and the like. Examples of the other copolymerizable monomers employed with the above (meth)acrylate monomers are, for instance, styrene derivatives such as styrene, α-methylstyrene, orthochlorostyrene and vinyltoluene; diolefines such as vinylnaphthalene, butadiene, isoprene and chloroprene; nitrile derivatives such as acrylonitrile and methacrylonitrile; vinyl acetate, vinyl chloride, vinylidene chloride, and the like.

Examples of the emulsifiers are, for instance, anionic surfactants such as sodium lauryl sulfate, sodium stearate, sodium dodecylbenzenesulfonate, sodium palmitate, potassium oleate, potassium rhodinate, paraffine sulfonic acid ester and naphthalene sulfonic acid ester; nonionic surfactants such as sorbitan monolaurate, polyoxyethylenealkyl ether and polyethyleneglycol monolaurate, and the like.

Examples of the polymerization initiators are, for instance, water soluble persulphates such as potassium persulfate and ammonium persulfate; oil soluble polymerization initiators such as cumenehydroperoxide, paramethanehydroperoxide, t-butylhydroperoxide, t-butylperoxiisopropyl carbonate and α,α'-azobisiso-butyronitrile; redox polymerization initiators, and the like.

If necessary, a polymerization adapting agents such as a chain transfer agent and an electrolyte may be admixed.

The present invention is more particularly described and explained by means of the following Examples, in which all percents are percents by weight unless otherwise noted. It is to be understood that the present invention is not limited to the Examples and various changes and modifications may be made in the invention without departing from the spirit and scope thereof.

In each Table in the following Examples, Experiment No. marked with "*" represents a reference example.

## Example 1

The scale deposition-preventing agent shown in Table 1 was applied in the amount of 0.2 g/m$^2$ on the surfaces of the inner wall of the stainless steel polymerization vessel of 15 $\ell$ and on the surfaces of the stirring blades and the buffle plates attached within the vessel. After drying, the vessel was charged with 4000 g of styrene-butadiene copolymer latex (solid content: 50 %), 6000 g of demineralized water, 0.2 g of disodium ethylenediaminetetraacetate, 0.1 g of ferrous sulfate and 8 g of Rongalit, and then the temperature in the vessel was adjusted to 60$^O$C. After addition of 400 g of 10 % aqueous solution of potassium sulfate, the polymerization was carried out for three hours by adding 1600 g of methyl methacrylate containing 12 g of cumenehydroperoxide with 400 g thereof every 30 minutes to the reaction mixture. To the resulting reaction mixture was further added 8 g of cumenehydroperoxide, and then the polymerization was carried out for one hour. After completion of the polymerization, the obtained polymer was taken out of the vessel and the inside of the vessel was observed. The total amount of scale deposited on all the surfaces in each Experiment is shown in Table 1.

Table 1

| Experiment No. | Scale deposition-preventing agent | Condition for drying | Amount of scale (g/m$^2$) |
|---|---|---|---|
| *1 | A mixture of methyl-methoxysilicone oil and ferric chloride | 90°C x 30 min | 510 |
| *2 | A mixture of methyl-hydrodiene poly-siloxane oil and zinc octylate | " | 230 |
| *3 | Anthraquinone·potassium disulfonate (pH 5.0) | 90°C x 10 min | 280 |
| *4 | A mixture of sodium abietinate and calcium acetate (pH 5.5) | 90°C x 30 min | 340 |
| *5 | 2-Mercaptoethanol | 90°C x 60 min | 825 |
| *6 | Phenylphosphonic amide | 90°C x 30 min | 680 |
| 7 | Reaction product of benzoquinone and phenylenediamine | 80°C x 30 min | 13 |
| 8 | Reaction product of benzoquinone and diaminonaphthalene | " | 8 |
| 9 | Reduced compound of reaction product of benzoquinone and phenylenediamine | 30°C x 60 min under reduced pressure | 0 |
| 10 | Reaction product of phenanthraquinone and diamino-naphthalene | " | 2 |
| *11 | None | - | 660 |

Note 1: A mixed solvent of dimethyl acetamide/acetone (80/20 by volume) was employed in the Experiment Nos. 7 to 10 as a solvent (surface tension: 28.3 dyne/cm at 50°C).

Note 2: The agent employed in Experiment No. 9 has hydroxyl group.

- 10 -

Example 2

The scale deposition-preventing agent shown in Table 2 was applied in amount of 1.0 $g/m^2$ on the surfaces of the inner wall of the stainless steel polymerization vessel of 100 $\ell$. After drying, the vessel was charged with 25 kg of styrenebutadiene copolymer latex (solid content: 50 %), 37.5 kg of demineralized water, 50 g of Rongalit, 1 g of disodium ethylenediaminetetraacetate and 0.5 g of ferrous sulfate, and then the temperature in the vessel was adjusted to $60^{\circ}C$. After addition of 2000 g of 10 % aqueous solution of sodium chloride, 100 g of cumenehydroperoxide was dissolved in a mixture of 8250 g of methyl methacrylate and 4250 g of styrene. The polymerization was carried out for three hours by adding 3150 g of the above mixture to the reaction mixture every 30 minutes. To the resulting reaction mixture was further added 50 g of cumenehydroperoxide, and then the polymerization was carried out for two hours. After completion of the polymerization, the obtained polymer was taken out of the vessel and the inside of the vessel was observed. The total amount of scale deposited on all the surfaces in each Experiment is shown in Table 2.

Table 2

| Experiment No. | Scale deposition-preventing agent | Condition for drying | Amount of scale $(g/m^2)$ |
|---|---|---|---|
| *12 | Distearyl thiodi-propionate | 90°C x 30 min | 610 |
| *13 | Mercaptobenz-imidazole | " | 180 |
| *14 | Distearyl penta-erythritoldiphosphite | " | 440 |
| *15 | 4-Methyl-6-cyclohexyl-phenol | 60°C x 30 min | 970 |
| *16 | Di-tertiary-butyl-4-ethylphenol | " | 1130 |
| *17 | Phenyl-α-naphtylamine | " | 1200 |
| 18 | Reduced compound of reaction product of benzoquinone and diaminonaphthalene | 30°C x 60 min under reduced pressure | 0 |
| 19 | Reaction product of phenanthraquinone and diaminobenzene | " | 5 |
| 20 | Reduced compound of reaction product of phenanthraquinone and diaminonaphthalene | " | 0 |
| *21 | None | - | 580 |

Note 1: A mixed solvent of dimethylacetamide and isopropyl acetate (80 : 20 by volume) was employed in Experiment Nos. 18 to 20 as a solvent (surface tension: 29.6 dyne/cm at 50°C).

Note 2: The agent employed in each Experiment Nos. 18 and 20 has hydroxyl group.

## Example 3

The scale deposition-preventing agent shown in Table 3 was applied in the amount of 0.5 g/m$^2$ on the surface of the inner wall of a stainless steel polymerization vessel of 8 ℓ and on the surfaces of the stirring blades and the buffle plates attached within the vessel. After drying, the vessel was charged with 1875 g of polybutadiene polymer latex (solid content: 40 %), 1875 g of demineralized water, 0.075 g of disodium ethylenediaminetetraacetate, 0.0375 g of ferrous sulfate and 3 g of Rongalit. At the temperature in the vessel of 60$^o$C, the polymerization was carried out for two hours by continuously adding a mixture of 4.5 g of cumenehydroperoxide, 450 g of methyl methacrylate, 150 g of styrene and 150 g of acrylonitrile. To the resulting reaction mixture was further added 3 g of cumenehydroperoxide, and then the polymerization was carried out for two hours. After completion of the polymerization, the obtained polymer was taken out of the vessel and the inside of the vessel was observed. The total amount of scale deposited on all the surfaces in each Experiment is shown in Table 3.

<div align="center">Table 3</div>

| Experiment No. | Scale deposition-preventing agent | Condition for drying | Amount of scale (g/m$^2$) |
|---|---|---|---|
| *22 | Silicone-modified epoxy resin to which a reaction product of benzoquinone and aminonaphthalene is added in the amount of 1 % | 80°C x 20 min | 460 |
| *23 | Sodium naphthylamine sulfonate (pH 4.5) | 90°C x 10 min | 270 |
| *24 | 2-Aminobenzothiazole | 90°C x 30 min | 480 |
| 25 | Reaction product of benzoquinone and diaminonaphthalene | 80°C x 30 min | 11 |
| 26 | Reduced compound of reaction product of benzoquinone and diaminonaphthalene | " | 0 |
| *27 | None | - | 720 |

Note 1: A mixed solvent of dimethylacetamide and acetone (80 : 20 by volume) was employed in Experiment Nos. 25 and 26 as a solvent (surface tension: 28.3 dyne/cm at 50°C).

Note 2: The agent employed in Experiment No. 26 has hydroxyl group.

## Example 4

The scale deposition-preventing agent shown in Table 4 was applied in the amount of 0.5 g/m$^2$ on the surface of the inner wall of a stainless steel polymerization vessel of 8 $l$ and on the surfaces of the stirring blades and the buffle plates attached within the vessel. After drying, the vessel was charged with 3000 g of demineralized water, 30 g of sodium dodecylbenzenesulfonate, 3 g of potassium persulfate, 1200 g of methyl methacrylate and 300 g of styrene, and then the polymerization was carried out at 70°C for eight hours. After completion of the polymerization, the obtained polymer was taken out of the vessel and the inside of the vessel was observed. The total amount of scale deposited on all the surfaces in each Experiment is shown in Table 4.

## Table 4

| Experiment No. | Scale deposition-preventing agent | Condition for drying | Amount of scale $(g/m^2)$ |
|---|---|---|---|
| *28 | Mixture of trifluoro-propylmethylpolysiloxane and zinc octalate | 90°C x 30 min | 805 |
| *29 | Chelating polymer | " | 770 |
| *30 | Polyindenyl | " | 640 |
| *31 | Pentaerythritol | " | 330 |
| *32 | Sodium aminonaphthalene disulfonate (pH 6.5) | " | 570 |
| 33 | Reduced compound of reaction product of benzoquinone and diaminonaphthalene | 50°C x 60 min under reduced pressure | 0 |
| 34 | Reduced compound of reaction product of phenanthraquinone and diaminonaphthalene | " | 0 |
| 35 | Reaction product of benzoquinone and diaminoazobenzene | " | 5 |
| 36 | Reduced compound of reaction product of benzoquinone and diaminoazobenzene | " | 0 |
| *37 | None | – | 930 |

Note 1: A mixed solvent of dimethylacetamide and isopropyl acetate (80 : 20 by volume) was employed in Experiment Nos. 33 to 36 as a solvent (surface tension: 29.6 dyne/cm at 50°C).

Note 2: The agent employed in each Experiment Nos. 33, 34 and 36 has hydroxyl group.

## Example 5

The scale deposition-preventing agent shown in Table 5 was applied in the amount of 0.5 g/m$^2$ on the surfaces of the inner wall of a stainless steel polymerization vessel of 3 $\ell$. After drying, the vessel was charged with 800 g of demineralized water, 20 g of potassium oleate, 2 g of tripotassium phosphate, 0.4 g of Rongalit, 0.02 g of disodium ethylenediaminetetraacetate, 0.012 g of ferrous sulfate, 120 g of styrene, 280 g of 1,3-butadiene and 0.4 g of p-menthanehydroperoxide, and then the polymerization was carried out at 30$^{\rm o}$C for 15 hours. To the resulting reaction mixture were added 800 g of demineralized water and 0.4 g of Rongalit, and the temperature in the vessel was adjusted to 60$^{\rm o}$C. After addition of 80 g of 10 % aqueous solution of potassium sulfate, the polymerization was carried out for two hours by adding 120 g of methyl methacrylate containing 0.4 g of cumenehydroperoxide with 30 g thereof every 30 minutes to the reaction mixture. To the resulting reaction mixture was further added 0.8 g of cumenehydroperoxide, and then the polymerization was carried out for one hour. After completion of the polymerization, the obtained polymer was taken out of the vessel and the inside of the vessel was observed. The total amount of scale deposited on all the surfaces in each Experiment is shown in Table 5.

Table 5

| Experiment No. | Scale deposition-preventing agent | Condition for drying | Amount of scale (g/m$^2$) |
|---|---|---|---|
| *38 | Sodium 7-amine-2-naphthylsulfonate | 80°C x 30 min | 230 |
| *39 | Silicone-modified epoxy resin | " | 310 |
| *40 | Mixture of methyl-hydrodienepolysiloxane oil and zinc octylate | 90°C x 30 min | 100 |
| *41 | Mercaptobenzomidoazole | " | 200 |
| 42 | Reaction product of β-naphthoquinone and diaminonaphthalene | 80°C x 30 min | 7 |
| 43 | Reaction product of benzoquinone and diaminonaphthalene | " | 11 |
| 44 | Reaction product of benzoquinone and phenylenediamine | " | 19 |
| 45 | Reduced compound of reaction product of β-naphthoquinone and diaminonaphthalene | " | 0 |

Note 1: A mixed solvent of dimethylformamide and n-buthanol (70 : 30 by volume) was employed in Experiment Nos. 42 to 45 as a solvent (surface tension: 25.7 dyne/cm at 50°C).

Note 2: The agent employed in Experiment No. 45 has hydroxyl group.

## Example 6

The scale deposition-preventing agent prepared by using the reaction product of benzoquinone and phenylenediamine in the mixed solvent having the surface tension as shown in Table 6 was applied on the surface of the stainless steel test-piece (SUS304) buff polishing # 320 (20 x 100 mm in size). After drying at $80^{\circ}$C for 30 minutes, the condition of the formed film was observed and estimated with a naked eye and an optical microscope.

The above test-piece was fixed on a buffle plate in a stainless polymerization vessel of 100 $l$, and then the polymerization was carried out in the same manner and condition as in Example 2. After completion of the polymerization, the obtained polymer was taken out of the vessel and the surface of the test-piece was observed. The total amount of scale deposited on all the surfaces in each Experiment is shown in Table 6.

Table 6

| Experiment No. | Solvent | Surface tension (dyne/cm at 50°C) | Condition of formed film | Amount of scale (g/m²) |
|---|---|---|---|---|
| 46 | Dimethylacetamide | 35.5 | partially spotty | 27 |
| 47 | Morpholine/ tetrahydrofuran = 60/40 (by volume) | 28.8 | uniform | 2 |
| 48 | Dimethylacetamide/ ethanol = 70/30 (by volume) | 27.9 | " | 10 |
| 49 | Dimethylformamide/ amyl acetate = 80/20 (by volume) | 26.9 | " | 8 |
| 50 | Experiment No. 48 + benzoic acid (0.2 %) | 28.4 | " | 5 |
| 51 | Experiment No. 48 + sulfamic acid (0.2 %) | 27.5 | " | 3 |
| 52 | Experiment No. 48 + disodium ethyl- enediaminetetra- acetate (0.2 %) | 29.6 | " | 10 |

- 20 -

## Example 7

The scale deposition-preventing agent shown in Table 7 was applied in the amount of 0.5 $g/m^2$ on the surface of the inner wall of a stainless steel polymerization vessel of 15 ℓ. After drying, the vessel was charged with 7000 g of demineralized water, 70 g of sodium dodecylbenzenesulfonate, 7 g of potassium persulfate, 2800 g of methyl methacrylate and 700 g of styrene, and then the polymerization was carried out at 70°C for eight hours. After completion of the polymerization, the obtained polymer was taken out of the vessel. After washing the inside of vessel, the polymerization was repeated in the same manner as in the above-mentioned procedures. The number of the repeated polymerization at which polymer scale was formed in an amount of 1 $g/m^2$ was measured. The results are shown in Table 7.

Table 7

| Experiment No. | Scale deposition-preventing agent | Condition for drying | Number of polymeri-zation |
|---|---|---|---|
| *53 | None | – | 0 |
| 54 | Reduced compound of reaction product of benzoquinone and phenylenediamine | 80°C x 30 min | 5 |
| 55 | Reduced compound of reaction product of benzoquinone and diaminonaphthalene | " | 11 |
| 56 | Reduced compound of reaction product of phenanthraquinone and diaminonaphthalene | " | 9 |

Note 1: A mixed solvent of dimethylacetamide and acetone (80 : 20 by volume) was employed in Experiment Nos. 54 to 56 as a solvent (surface tension: 28.3 dyne/cm, at 50°C).

Note 2: The agent employed in each Experiment Nos. 54 to 56 has hydroxyl group.

WHAT WE CLAIM IS:

1. In a process for polymerizing an acrylate or a methacrylate monomer alone, a mixture thereof or a mixture of an acrylate or a methacrylate monomer as a main component and other copolymerizable monomers in the presence of water, an emulsifier and a polymerization initiator soluble in water or the monomers; the improvement which comprises carying out the polymerization in a polymerization vessel having a film on an inner surface thereof and on surfaces of attached instruments within the vessel, said film being formed by applying a solution of an aromatic quinone-amine compound which is insoluble in water or the monomers, contains a quinone group and an amine group capable of inhibiting the radical polymerization and contains a functional group having a chelate-forming ability for adhering the compound to the surfaces, and removing the solvent by drying.

2. The process of Claim 1, wherein the functional group having a chelate-forming ability is a substituent of the aromatic ring having at least one member selected from the group consisting of oxygen atom, nitrogen atom, phosphorus atom, sulfur atom, amino group and carbonyl group.

3. The process of Claim 1, wherein the aromatic quinone-amine compound has a hydrophilic group.

4. The compound of Claim 3, wherein the hydrophilic group is at least one member selected from the group consisting of hydroxyl group, amino group and imino group.